(19) Europäisches Patentamt
European Patent Office
Office européen des brevets

(11) **EP 1 997 035 B1**

(12) **FASCICULE DE BREVET EUROPEEN**

(45) Date de publication et mention
de la délivrance du brevet:
**25.12.2013 Bulletin 2013/52**

(21) Numéro de dépôt: **07712429.5**

(22) Date de dépôt: **05.03.2007**

(51) Int Cl.:
*G06F 17/15* (2006.01)      *G01S 19/30* (2010.01)

(86) Numéro de dépôt international:
**PCT/EP2007/052037**

(87) Numéro de publication internationale:
**WO 2007/107445 (27.09.2007 Gazette 2007/39)**

(54) **PROCEDE ET DISPOSITIF DE CALCUL DE CORRELATION RAPIDE**

VERFAHREN UND VORRICHTUNG ZUR SCHNELLEN KORRELATIONSBERECHNUNG

METHOD AND DEVICE FOR FAST CORRELATION CALCULATION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.03.2006 FR 0602459**

(43) Date de publication de la demande:
**03.12.2008 Bulletin 2008/49**

(73) Titulaire: **Thales**
**92200 Neuilly Sur Seine (FR)**

(72) Inventeurs:
• **MARTIN, Nicolas**
**F-26500 Bourg Les Valence (FR)**
• **CLAUZEL, Yves**
**F-26200 Montelimar (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
EP-A- 0 789 467      WO-A-00/65751
WO-A-2005/109028      WO-A2-03/003807

• **POLYDOROS A ET AL: "A unified approach to serial search spread-spectrum code acquisition - Part II: A matched-filter receiver" IEEE TRANSACTIONS ON COMMUNICATIONS, vol. COM-32, no. 5, mai 1984 (1984-05), pages 550-560, XP001079090 IEEE, US ISSN: 0090-6778**
• **POLYDOROS A ET AL: "A unified approach to serial search spread-spectrum code acquisition - Part I: General theory" IEEE TRANSACTIONS ON COMMUNICATIONS, vol. COM-32, no. 5, mai 1984 (1984-05), pages 542-549, XP002289420 IEEE, US ISSN: 0090-6778**
• **DAFESH P A ET AL: "Practical and theoretical tradeoffs of Active Parallel Correlator and Passive Matched Filter Acquisition Implementations" PROCEEDINGS OF THE IAIN WORLD CONGRESS IN ASSOCIATION WITH THE U.S. ION ANNUAL MEETING, 26-28 JUNE 2000, SAN DIEGO, CA, US, 26 juin 2000 (2000-06-26), XP008073717**

EP 1 997 035 B1

**Description**

Le domaine de l'invention est celui de la réception d'un signal de radionavigation provenant d'un système de positionnement par satellites tel que le système GPS (acronyme de l'expression anglo-saxonne « Global Positioning System »). Plus particulièrement, l'invention concerne l'accélération des calculs de corrélations mis en oeuvre pour synchroniser le signal radionavigation avec un code généré localement sur un récepteur.

Pour un récepteur de système de positionnement par satellites, une durée d'acquisition de signal de radionavigation qui est courte constitue une caractéristique recherchée pour un système de positionnement. En effet, lors de la mise en marche d'un récepteur, la durée d'acquisition est la durée pendant laquelle l'information de positionnement ne peut pas encore être délivrée par le récepteur.

On rappelle succinctement le fonctionnement du système GPS. Il est constitué d'une constellation de 28 satellites et d'un réseau terrestre de stations de référence à terre. Chaque satellite gravite à environ 20 000 km de la terre avec une période de révolution de 12 heures. Chacun d'eux émettent deux signaux, l'un à 1575.452 MHz pour les applications civiles et l'autre à 1227.6 MHz pour les applications à accès réservés. Le signal émis par un satellite est constitué d'une porteuse, éventuellement d'une sous-porteuse dans le cas d'une modulation BOC, modulée par un code d'étalement connu et éventuellement par des données inconnues. Les satellites émettent tous sur les mêmes fréquences et les signaux émis se différencient par leur code.

Ces codes présentent généralement une période T, qui peut être courte, par exemple 1 ms, ou très longue à l'échelle de temps considérée, par exemple une semaine, mais ils peuvent également être non périodiques, c'est le cas par exemple pour des signaux cryptés. Les codes sont typiquement constitués d'un grand nombre de divisions temporelles élémentaires, appelées encore « chips » de code qui ont une durée moyenne égale à $D_{chip}$.

Le positionnement du récepteur est obtenu en mesurant la distance entre un satellite et le récepteur à partir de la durée de propagation du signal entre ce satellite et le récepteur. Dans le récepteur, une réplique du code émis est générée localement ; le décalage temporel entre le signal reçu et le signal local, c'est-à-dire la réplique du code, correspond à la durée de propagation recherchée. Ce décalage est mesuré en mettant en phase le signal reçu et le signal local ; le critère de mise en phase correspond à la maximisation de la fonction de corrélation des deux signaux, c'est-à-dire à la recherche d'un pic dans des résultats de corrélation entre le signal reçu et le signal local, des hypothèses de décalage différente entre le signal reçu et le signal local étant considérée pour chaque calcul de corrélation.

Les calculs de corrélation sont effectués à partir des composantes réelle et imaginaire du signal reçu, résultant d'un échantillonnage du signal de radionavigation analogique effectué à une fréquence $F_e$ supérieure à $2/D_{chip}$, où $D_{chip}$ est la durée moyenne d'un chip de code, selon le critère de Shannon. En sortie de l'antenne du récepteur, le signal est, de manière classique, converti en fréquence intermédiaire, filtré, échantillonné, puis converti en bande de base par un traitement numérique, avant la corrélation avec un code local d'un satellite.

Un calcul de corrélation est fondé sur une hypothèse réalisée sur la date de réception du signal émis par le satellite au niveau de l'antenne du récepteur. On effectue des calculs de corrélation pour différentes hypothèses correspondant à des différentes dates de réception espacées d'une durée demi-chip de code les unes par rapport aux autres. Les calculs de corrélation sont effectués sur un intervalle d'intégration dont on peut faire varier la durée $T_{int}$ en fonction du rapport signal à bruit prédit à priori. Pour un code périodique de période T égale à 1024 chips, cela nécessite de tester jusqu'à (2.1024)=2048 hypothèses, soit par conséquent 2048 calculs de corrélation à réaliser.

Par ailleurs, dans ce cas, le calcul d'une corrélation entre le signal reçu et le signal local pour une hypothèse de date de réception du code reçu correspond à $T_{int}.F_e$ produits entre des échantillons des deux signaux puis $T_{int}.F_e$-1 sommes des résultats des produits. Lorsque la durée d'un calcul d'une corrélation vaut $D_{Calcul}$, et si les calculs des 2048 corrélations sont réalisés séquentiellement, la durée totale du calcul des corrélations vaut alors $2048.D_{Calcul}$. Cette durée totale peut dépasser la dizaine de minutes pour mettre en phase le code du signal reçu c'est-à-dire pour accéder et utiliser les données produites par le satellite qui émet le signal.

A intervalle d'intégration de durée fixe, une première solution pour réduire la durée totale du calcul des corrélations consiste à réduire la durée d'un calcul de corrélation, par exemple en effectuant les opérations (produits puis sommes) en parallèle plutôt que de les effectuer en série comme décrit précédemment. De cette façon, la durée totale de calcul des corrélations est réduite, car les opérations sont réalisées simultanément.

Dans la suite on se place dans le cadre de cette solution.

Dans un certain nombre de situations, la réduction de la durée totale du calcul des corrélations obtenue par la première solution présentée n'est pas suffisante, c'est le cas par exemple, lorsque la période T du code est longue ou lorsque le nombre des corrélations élémentaires à effectuer est multiplié en raison d'un nombre important d'hypothèses à faire sur la fréquence du signal à considérer pour compenser l'effet Doppler.

Le document WO 00/65751 A (Global Locate) divulgue un procédé de calcul de corrélations entre une première séquence et une deuxième séquence de même durée $D_{code}$. La première séquence est extraite d'un signal numérique comportant un code comportant des divisions temporelles élémentaires, appelée chips, d'une durée $D_{chip}$. Les chips sont échantillonnées sur des impulsions délivrées par un oscillateur NCO à la fréquence moyenne $2/D_{chip}$. La deuxième séquence résulte d'un échantillonnage à une fréquence $F_e$ d'un signal analogique, supérieure à $2/D_{chip}$. Le procédé comporte une étape de cumul des échantillons de la deuxième séquence, sur des intervalles d'intégration consécutifs de durée égale en moyenne à $D_{chip/2}$, débutant à chaque impulsion de l'oscillateur NCO, pour déterminer des résultats de cumuls élémentaires. Les résultats de cumuls élémentaires sont employés pour déterminer des résultats de calculs de corrélations entre une première séquence et des deuxièmes séquences, les deuxièmes séquences se déduisant l'une de l'autre par un décalage temporel de durée $D_{chip/2}$.

Le but de l'invention est donc de pouvoir réduire la durée totale du calcul des corrélations en évitant de répéter des calculs intermédiaires qui sont communs d'un calcul de corrélation à un autre.

Pour atteindre ce but, l'invention propose un procédé de calcul de corrélations entre une première séquence et une deuxième séquence, ladite première séquence et ladite deuxième séquence ayant chacune une durée $D_{Code}$, la première séquence étant extraite d'un signal numérique comportant un code, ledit code comportant des divisions temporelles élémentaires, appelées chips, d'une durée $D_{chip}$, lesdits chips étant échantillonnés sur des impulsions délivrées par un oscillateur NCO à la fréquence moyenne $2/D_{chip}$, la deuxième séquence résultant d'un échantillonnage à une fréquence $F_e$ d'un signal analogique, la fréquence $F_e$ étant supérieure à $2/D_{chip}$.

Le procédé comprend une étape de cumul des échantillons de la deuxième séquence, sur des intervalles d'intégration consécutifs de durée égale en moyenne à $D_{chip/2}$, débutant à chaque impulsion de l'oscillateur NCO, pour déterminer des résultats de cumuls élémentaires. Les résultats de cumuls élémentaires sont employés pour déterminer des résultats de calculs de correlations entre une première séquence et des deuxièmes séquences, les deuxièmes séquences se déduisant l'une de l'autre par un décalage temporel de durée $D_{chip/2}$. Le procédé comprend, en outre, les étapes suivantes :

- une étape de sommation de deux résultats de cumuls élémentaires consécutifs pour obtenir des résultats de double cumul élémentaire;
- une étape de pondération de chaque résultat de double cumul élémentaire de la deuxième séquence par la valeur du code de la première sequence pour obtenir des résultats de cumuls doubles pondérés; et
- une étape d'accumulation des résultats de cumuls doubles pondérés.

Un premier avantage de l'invention tient en ce qu'elle contribue à réduire la durée d'un calcul de corrélation élémentaire. En effet, un cumul d'échantillons de la deuxième séquence permet, comme cela sera montré plus loin, de réduire le nombre d'opérations arithmétiques réaliser pour obtenir un résultat de calcul de corrélation élémentaire, notamment des produits entre échantillons de code et de signal. Le cumul équivaut à une mise en facteur commun qui est rendu possible par la stabilité de la valeur du code sur la durée du cumul. Cet avantage de l'invention est d'autant plus important que la durée du cumul est élevée par rapport à la durée d'un échantillons de signal à $F_e$ de la deuxième séquence.

L'avantage de l'invention apparaît lorsqu'on a à réaliser une série de $N_c$ calculs de corrélations élémentaires. Ainsi, lorsque l'on peut mémoriser des résultats de calculs intermédiaires, par exemple des résultats de cumuls élémentaires, qui sont communs aux $N_c$ calculs, on contribue à réduire la durée totale nécessaire pour réaliser les $N_c$ calculs de corrélation, à condition que la durée nécessaire pour effectuer les calculs intermédiaires soit supérieure à la durée nécessaire pour accéder aux résultats mémorisés de ces calculs.

L'invention a également pour objet un récepteur d'un signal de radionavigation caractérisé en ce qu'il comprend un composant numérique de type ASIC ou FPGA mettant en oeuvre le procédé tel que décrit.

Un autre avantage de l'invention tient en ce que, puisque le procédé de calcul de corrélation selon l'invention nécessite moins d'opérations arithmétiques que les procédés de l'état de la technique, un composant numérique mettant en oeuvre le procédé selon l'invention requiert moins d'opérateurs logiques réalisant en parallèle ces produits. Le gain en espace dans les circuits du composant numérique qui sont engendrés par cette économie d'opérateur logiques, peut se traduire par une augmentation de la capacité de calcul qui permet d'améliorer indirectement la rapidité des calculs de corrélation ou par une réduction de la consommation électrique des circuits du composant numérique.

Enfin, un autre intérêt de l'invention réside dans la possibilité qu'elle offre de multiplexer temporellement les calculs et de réduire le nombre d'opérateurs qu'il est nécessaire de mettre en oeuvre simultanément. En effet, on peut profiter de ce que la fréquence de fonctionnement du composant numérique ($F_{ech}$) est beaucoup plus élevée que $F_{code}$ et utiliser un même opérateur à plusieurs reprise, pendant la durée d'un demi chip.

D'autres caractéristiques et avantages de l'invention apparaîtront à la lecture de la description détaillée qui suit, faite à titre d'exemple non limitatif et en référence aux dessins annexés dans lesquels :

la figure 1 représente des signaux temporels explicitant un procédé de calcul de corrélation selon l'état de la technique ;
la figure 2 sert de support à une présentation du principe, sur un exemple de signaux temporels, des procédés de calcul de quatre corrélations, selon l'invention ;

les figures 3 représentent schématiquement un premier mode de réalisation d'une architecture de corrélateur connue sous le nom de « Multicorrélateur»;

les figures 4 représentent schématiquement une première variante de réalisation de l'architecture d'un « Multicorrélateur»;

les figures 5 représentent schématiquement une deuxième variante de l'architecture d'un « Multicorrélateur», mettant en oeuvre le procédé de calcul selon l'invention;

la figure 6 représente schématiquement un premier mode de réalisation d'une architecture de corrélateur connue sous le nom de « filtre adapté»;

la figure 7 représente schématiquement une variante de réalisation de l'architecture d'un « filtre adapté», mettant en oeuvre le procédé de calcul selon l'invention.

D'une figure à l'autre, les mêmes éléments sont repérés par les mêmes références.

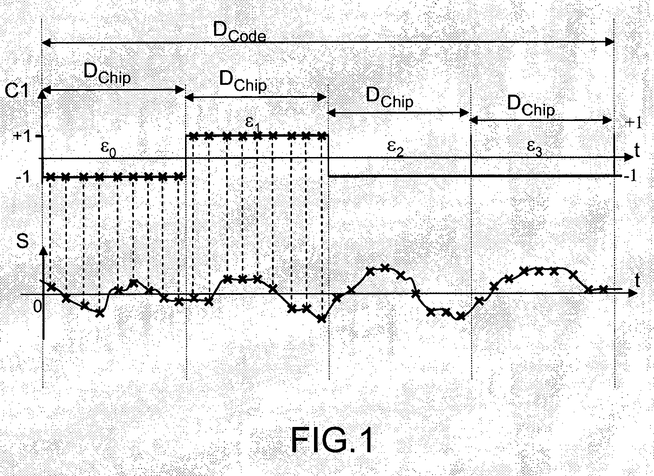

La figure 1 représente, suivant un même axe temporel, une évolution temporelle C1 (t) d'un code pseudo-aléatoire généré par un récepteur d'un système de positionnement par satellite, et une évolution temporelle S(t) d'un signal de radionavigation reçu par le récepteur.

Le code pseudo-aléatoire est un code binaire signé, valant +1 ou -1, qui est généré localement par le récepteur d'un système de positionnement par satellite. Le code généré localement a une durée $D_{Code}$, il comporte des divisions temporelles élémentaires, appelés chips de code, de durée moyenne $D_{chip}$. Pour simplifier la représentation de la figure 1, on a

choisi un code comportant quatre chips, mais le code pourrait comporter un nombre beaucoup plus important de chips, par exemple 1024, ou plus. Pendant la durée d'un chip, le code conserve une valeur constante : les valeurs successives prises par le code sont nommées $\varepsilon_i$ ou i est un indice identifiant un chip du code généré par le récepteur.

En réception, les informations contenues dans le signal de radionavigation sont extraites par deux démodulations successives. Une première démodulation permet de transposer le signal reçu en bande de base. Cette démodulation est réalisée à l'aide de porteuses locales engendrées par un ou plusieurs oscillateurs analogiques (avant échantillonnage) et par un oscillateur numériques piloté en fréquence par le récepteur (après échantillonnage). Une deuxième démodulation permet de dés-étaler la suite d'informations binaires (ou code reçu) présentes dans le signal reçu à l'aide de séquences binaires (ou code local) engendrées localement par un générateur de séquence binaire pseudo-aléatoire.

La présente invention concerne une simplification de la deuxième démodulation. Dans la suite, on appellera « signal reçu » ou « signal S » un signal analogique qui est échantillonné à une fréquence $F_e$ supérieure à $2/D_{chip}$. et mis en bande de base. Sur la représentation de la figure 1, des croix figurent les valeurs échantillonnées du signal reçu.

Selon un état de la technique, un calcul de corrélation entre un signal reçu et un code généré localement est réalisé en plusieurs étapes :

- réaliser un échantillonnage du code C1 synchrone de l'échantillonnage du signal reçu,
- multiplier deux à deux les échantillons du code et du signal reçu, correspondant à une même date d'échantillonnage, sur la durée $D_{Code}$ pour déterminer $N_{ech} = F_e$. $D_{Code}$ résultats de produits d'échantillons,
- sommer les résultats de produits d'échantillons.

Le résultat du calcul de corrélation s'exprime sous la forme suivante : $$Corrélation_1 = \sum_{i=1}^{Nech} S(t_i)C1(t_i)$$

où i est un indice d'échantillonnage, $t_i$ est la i-ième date d'échantillonnage du signal reçu S, $S(t_i)$ est la valeur du signal S à la date $t_i$ et C1 $(t_i)$ est la valeur du code à la date $t_i$.

Conformément à l'expression de $Corrélation_1$, un calcul de corrélation selon cet état de la technique requiert de réaliser successivement $N_{ech}$ produits entre des échantillons numériques puis $N_{ech}-1$ sommes de résultats de ces produits d'échantillons. Selon cet état de la technique, lorsqu'on réalise une série de M calculs de corrélations élémentaires, le nombre total de produits à réaliser est $M.N_{ech}$ et le nombre d'additions à effectuer vaut $M.(N_{ech}-1)$.

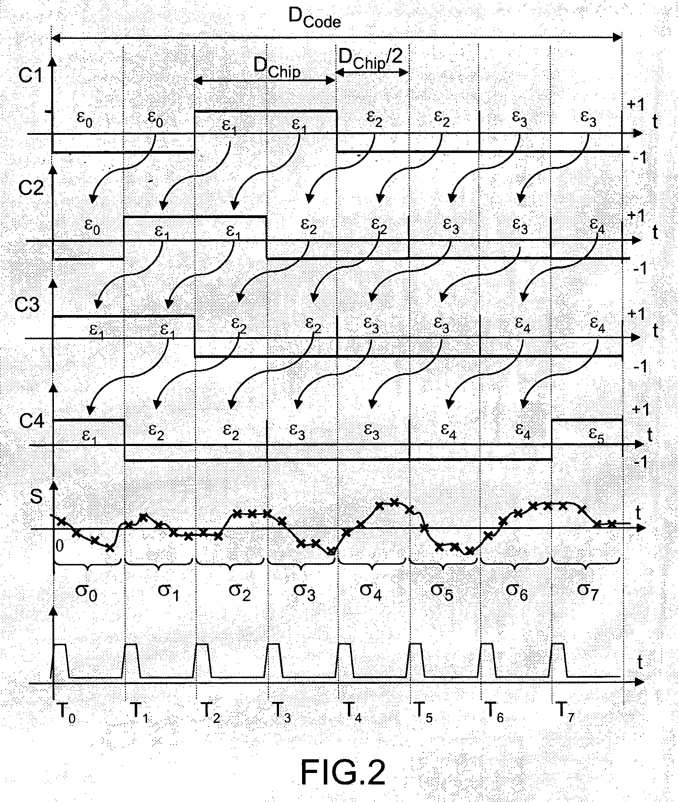

La figure 2 représente, suivant un même axe temporel, quatre évolutions temporelles de code pseudo-aléatoire : C1(t), C2(t), C3(t), C4(t), correspondant à quatre hypothèses de position du code reçu, une évolution temporelle S(t) du signal de radionavigation reçu par le récepteur, et des impulsions générées localement par le récepteur.

Les impulsions sont générées localement par un oscillateur NCO intégré au récepteur, à la fréquence moyenne $1/(2.D_{chip})$, elles déclenchent les transitions entre les chips de code de la séquence C1 à la fréquence moyenne$1/D_{chip}$. Les impulsions coïncident avec des instants d'échantillonnage du signal reçu, à la fréquence $F_{ech}$. Le temps écoulé entre deux impulsions correspond en moyenne à $D_{chip}/2$, mais avec un jitter dû à la non-coïncidence entre la fréquence d'échantillonnage $F_{ech}$ et la fréquence du code local.

L'invention trouve un intérêt particulier lorsque l'on cherche à calculer les résultats d'une série de corrélations entre des premières séquences et une deuxième séquence. Les quatre premières séquences C1, C2, C3, C4 ont une durée identique égale à $D_{Code}$. Les premières séquences C2, C3 et C4 se déduisent de la séquence C1 par un décalage temporel correspondant respectivement à la durée d'un demi-chip, d'un chip et d'un chip et demi.

La deuxième séquence résulte d'un échantillonnage à une fréquence $F_e$ d'un signal analogique, la fréquence $F_e$ étant supérieure à $2/D_{chip}$.

La corrélation de C1 et de S, appelée $Corrélation_1$, d'une part, la corrélation de C2 et de S, appelée $Corrélation_2$, d'autre part, la corrélation de C3 et de S, appelée $Corrélation_3$, et enfin la corrélation de C4 et de S, appelée $Corrélation_4$ peuvent s'exprimer à l'aide de valeurs $\sigma_i$ qui sont des résultats de cumuls élémentaires de valeurs d'échantillons consécutifs du signal S à des dates d'échantillonnage $t_i$ sur la durée de l'intervalle d'intégration, c'est à dire à la durée séparant deux impulsions consécutives de l'oscillateur NCO qui correspond à la durée d'un demi-chip. Etant donné que la valeur prise par S est constante pendant la durée d'un demi-chip, ces quatre corrélations peuvent s'exprimer comme suit :

$$Corr_1 = \varepsilon_0.\sigma_0 + \varepsilon_0.\sigma_1 + \varepsilon_1.\sigma_2 + \varepsilon_1.\sigma_3 + \varepsilon_2.\sigma_4 + \varepsilon_2.\sigma_5 + \varepsilon_3.\sigma_6 + \varepsilon_3.\sigma_7$$

$$Corr_2 = \varepsilon_0.\sigma_0 + \varepsilon_1.\sigma_1 + \varepsilon_1.\sigma_2 + \varepsilon_2.\sigma_3 + \varepsilon_2.\sigma_4 + \varepsilon_3.\sigma_5 + \varepsilon_3.\sigma_6 + \varepsilon_4.\sigma_7$$

$$Corr_3 = \varepsilon_1.\sigma_0 + \varepsilon_1.\sigma_1 + \varepsilon_2.\sigma_2 + \varepsilon_2.\sigma_3 + \varepsilon_3.\sigma_4 + \varepsilon_3.\sigma_5 + \varepsilon_4.\sigma_6 + \varepsilon_4.\sigma_7$$

$$Corr_4 = \varepsilon_1.\sigma_0 + \varepsilon_2.\sigma_1 + \varepsilon_2.\sigma_2 + \varepsilon_3.\sigma_3 + \varepsilon_3.\sigma_4 + \varepsilon_4.\sigma_5 + \varepsilon_4.\sigma_6 + \varepsilon_5.\sigma_7$$

Dans l'exemple représenté sur la figure 2, on comptabilise trente-six échantillons pendant l'intervalle d'intégration $D_{Code}$. Selon l'état de la technique le calcul des quatre corrélations nécessite (4*35) cent-quarante additions et (4*36) cent-quarante-quatre produits.

Pour calculer les quatre corrélations selon un procédé de calcul décrit à titre d'exemple, on procède tout d'abord au calcul des huit cumuls élémentaires $\sigma_0, \sigma_1, \sigma_2, \sigma_3, \sigma_4, \sigma_5, \sigma_6, \sigma_7$. Par exemple, $\sigma_0$ requiert trois additions pour cumuler les quatre échantillons de S compris entre $T_0$ et $T_1$, $\sigma_1$ requiert quatre additions pour cumuler les cinq échantillons de S compris entre $T_1$ et $T_2$, etc... Au total vingt-huit additions sont nécessaires pour déterminer les valeurs des cumuls élémentaires.

Pour chacune des corrélations, on pondère ensuite les huit cumuls élémentaires par des valeurs $\varepsilon_i$ adaptées. Les valeurs $\varepsilon_i$ adaptées sont les valeurs prises par la séquence de code pendant la durée de l'intervalle d'intégration qui correspond au cumul élémentaire $\sigma_i$. De cette manière, on obtient ainsi huit valeurs de cumuls pondérés que l'on somme entre-elles. Pour chacune des corrélations, les étapes de pondération et de sommation représentent huit nouveaux produits et huit nouvelles additions. Pour l'ensemble des quatre calculs de corrélation, ce procédé de calcul nécessite (28+4*8) soixante additions et (4*8) trente-deux produits, ce qui représente dans cet exemple, une réduction du nombre d'additions égale à cinquante-sept pour-cents et une réduction du nombre de produits égale à soixante-dix-huit pour-cents par rapport au même calcul effectué selon l'état de la technique mentionné précédemment.

Dans les expression de $Corr_1$, $Corr_2$, $Corr_3$, $Corr_4$, il est possible de mettre en facteur les valeurs de $\varepsilon_i$. Ce faisant, on aboutit alors à quatre nouvelles expressions des corrélations à calculer :

$$Corr_1 = \varepsilon_0.(\sigma_0+\sigma_1) + \varepsilon_1.(\sigma_2+\sigma_3) + \varepsilon_2.(\sigma_4+\sigma_5) + \varepsilon_3.(\sigma_6+\sigma_7)$$

$$Corr_2 = \varepsilon_0.\sigma_0 + \varepsilon_1.(\sigma_1+\sigma_2) + \varepsilon_2.(\sigma_3+\sigma_4) + \varepsilon_3.(\sigma_5+\sigma_6) + \varepsilon_4.\sigma_7$$

$$Corr_3 = \varepsilon_1.(\sigma_0+\sigma_1) + \varepsilon_2.(\sigma_2+\sigma_3) + \varepsilon_3.(\sigma_4+\sigma_5) + \varepsilon_4.(\sigma_6+\sigma_7)$$

$$Corr_4 = \varepsilon_1.\sigma_0 + \varepsilon_2.(\sigma_1+\sigma_2) + \varepsilon_3.(\sigma_3+\sigma_4) + \varepsilon_4.(\sigma_5+\sigma_6) + \varepsilon_5.\sigma_7$$

Ces nouvelles expressions mettent en lumière le procédé selon l'invention pour réaliser un calcul des quatre corrélations en réduisant encore plus le nombre d'additions et de produits à effectuer.

En effet, pour réaliser ces quatre calculs de corrélations, on observe que l'on peut simplifier les calculs en stockant des doubles cumuls élémentaires qui sont constitués par une somme de deux valeurs consécutives de $\sigma_i$. Soit, par exemple, quatre doubles cumuls élémentaires $(\sigma_0+\sigma_1)$, $(\sigma_2+\sigma_3)$, $(\sigma_4+\sigma_5)$, $(\sigma_6+\sigma_7)$ pour calculer les expressions Corr$_1$ et Corr$_3$ et trois doubles cumuls élémentaires $(\sigma_1+\sigma_2)$, $(\sigma_3+\sigma_4)$, $(\sigma_5+\sigma_6)$ pour calculer les expressions Corr$_2$ et Corr$_4$.

Dans ce cas, en plus des vingt-huit additions nécessaires pour calculer individuellement les huit cumuls élémentaires, on procède simplement à sept nouvelles additions pour calculer les sept doubles cumuls élémentaires. Selon le calcul de corrélation, on pondère ensuite un cumul élémentaire, ou un double cumul élémentaire par une valeur $\varepsilon_i$ adaptée afin d'obtenir des facteurs que l'on somme entre eux. Pour l'ensemble des quatre calculs de corrélation, le procédé de calcul selon l'invention requiert donc au total quarante-neuf additions et dix-huit produits, ce qui représente dans cet exemple, une réduction du nombre d'additions égale à soixante cinq pour-cents et une réduction du nombre de produits égale à quatre-vingt huit pour-cents par rapport au même calcul de corrélation effectué selon l'état de la technique mentionné précédemment.

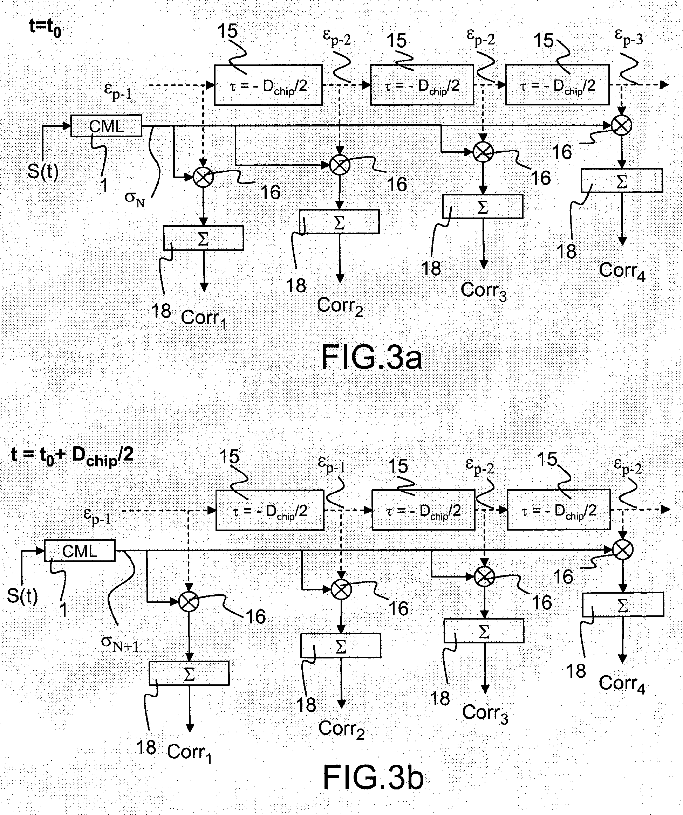

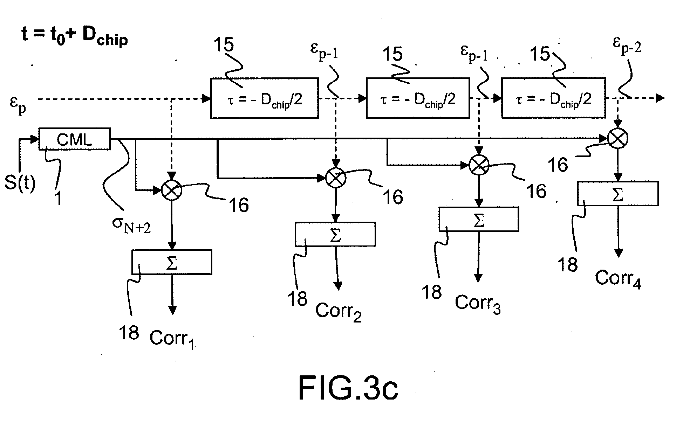

Les figures 3 illustrent le principe d'un premier mode de réalisation d'un dispositif selon le procédé de calcul décrit à titre d'exemple connue sous les noms « Multi-corrélateurs », « Active Parallel Correlator », en anglais ou sous l'acronyme ACP. Un récepteur de signal satellite d'un système de positionnement par satellite acquiert sur une durée D$_{Code}$ un signal analogique de radionavigation S et l'échantillonne à une fréquence F$_e$. Le récepteur calcule des résultats de corrélation entre le signal S et un code généré localement sur le récepteur.

Le code pseudo-aléatoire généré localement est un signal qui comporte des chips de durée moyenne D$_{chip}$ pendant lesquels le code conserve une valeur constante $\varepsilon_i$. Des impulsions, générées par un oscillateur NCO qui est intégré au récepteur, pilotent des transitions entre les chips à la fréquence moyenne F$_{Code}$=1/D$_{chip}$. D'autres impulsions générées par cet oscillateur NCO à une fréquence 2.F$_{Code}$, sont également employées pour piloter un échantillonnage du code à cette fréquence et cadencer des cumuls d'échantillons de code réalisés entre deux impulsions successives. La fréquence F$_{Code}$ est inférieure à la moitié de la fréquence d'échantillonnage de S, c'est à dire inférieure à F$_e$/2.

On exprime le code échantillonné à la fréquence 2.F$_{code}$ sous la forme d'une suite $\varepsilon_i$, dont deux composantes consécutives sont identiques, où i est un indice d'échantillon de code pouvant aller par exemple de 0 à p-1 où p est égal à la partie entière de D$_{Code}$/D$_{chip}$. Les valeurs prises par le code échantillonné à la fréquence 2.F$_{code}$, sont transmises séquentiellement dans un registre à décalage, cadencé avec les impulsions à la fréquence 2.F$_{Code}$ générées par l'oscillateur NCO.

Les figures 3a, 3b et 3c représentent le même dispositif de calcul de corrélation à trois instants successifs t$_0$, t$_0$+D$_{chip}$/2 et t$_0$+D$_{chip}$ correspondant à une nouvelle impulsion de l'oscillateur.

Entre les figures 3a, 3b, et 3c les valeurs $\varepsilon_i$ stockées dans les registres 15, se sont déplacées de la gauche vers la droite de la figure. De façon synchrone, le contenu de chaque registre 15 du registre à décalage est envoyés vers une première entrée d'opérateur multiplicatif 16.

Parallèlement, un dispositif d'accumulation CML, 1 cumule des échantillons du signal S sur une durée séparant deux impulsions consécutives de l'oscillateur NCO, c'est à dire en moyenne sur la durée D$_{chip}$/2. Dans la suite, on note $\sigma_j$ ces cumuls d'échantillons, où j est un indice de cumul élémentaire pouvant aller par exemple de 0 à 2.(p-1).

Les valeurs prises par les cumuls élémentaires, sont envoyées séquentiellement sur les deuxièmes entrées des opérateurs multiplicatifs 16. Ces envois sont synchronisés avec les impulsions de l'oscillateur NCO. Sur les figures 3a, 3b et 3c, on envoie successivement $\sigma_N$, $\sigma_{N+1}$ et $\sigma_{N+2}$ sur les deuxièmes entrées des opérateurs multiplicatifs 16.

Les résultats de cumuls élémentaires sont employés pour déterminer des résultats de calculs de corrélations entre des premières séquences et une deuxième séquence, les premières séquences se déduisant l'une de l'autre par un décalage temporel de durée D$_{chip}$/2.

Sur une sortie, chaque opérateur multiplicatif 16, délivre à la fréquence 2.F$_{code}$ un résultat d'un produit d'un code échantillonné $\varepsilon_i$ et d'un cumul élémentaires $\sigma_j$. Ce résultat correspond à une étape de pondération de chaque cumul élémentaire $\sigma_i$ par une valeur de la séquence de code $\varepsilon_i$ pendant l'intervalle d'intégration correspondant au calcul de $\sigma_i$. Ces résultats sont accumulés en sortie des opérateurs multiplicatifs dans des dispositifs accumulateurs $\Sigma$ 18.

Le procédé comporte en outre, pour chaque première séquence :

- une étape de pondération de chaque résultat de cumul élémentaire de la deuxième séquence par la valeur du chip de la première séquence au début du cumul élémentaire, pour obtenir des résultats de cumuls pondérés, et
- une étape d'accumulation des résultats de cumuls pondérés.

Avantageusement, l'étape d'accumulation délivre au moins un résultat après p impulsions successives de l'oscillateur NCO, où p est égal à la partie entière de D$_{Code}$/D$_{chip}$.

Si avant l'instant t$_0$ qui correspond à la figure 3a, les sommateurs sont vides, ils collectent à l'instant t$_0$+D$_{chip}$, qui correspond à la figure 3c, trois valeurs de cumuls pondérés constitués comme des produits d'un cumul élémentaire et d'un code échantillonné.

Après un grand nombre d'impulsions, par exemple 2048, on dispose simultanément d'autant de résultats de calculs de corrélation que le registre à décalages compte de registres. Ces résultats acquis en parallèles sont régulièrement envoyés à un calculateur qui peut, en fonction des résultats de calculs de corrélation collectés, décider de reprendre des calculs de corrélations avec un code local retardé ou avancé. C'est la raison pour laquelle cette méthode est qualifiée d'«active».

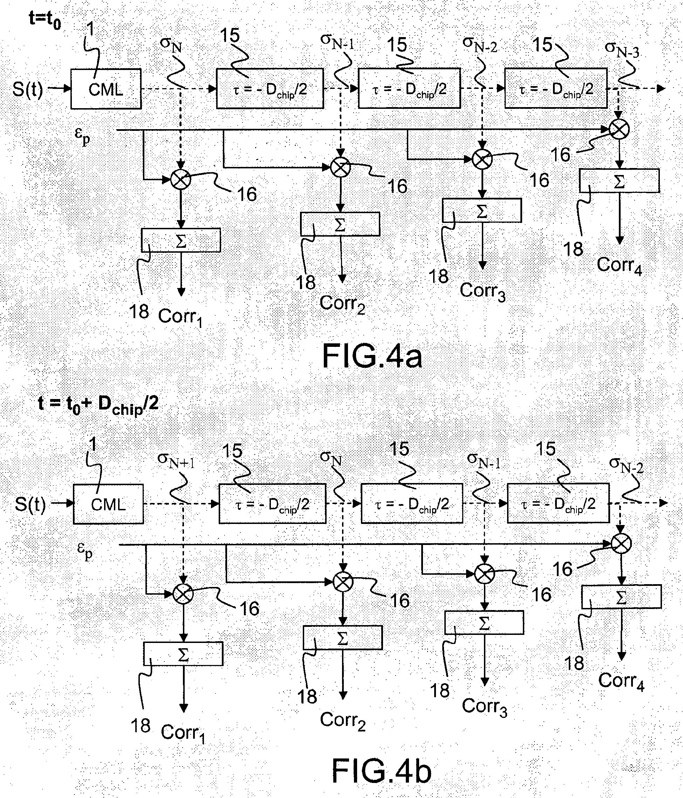

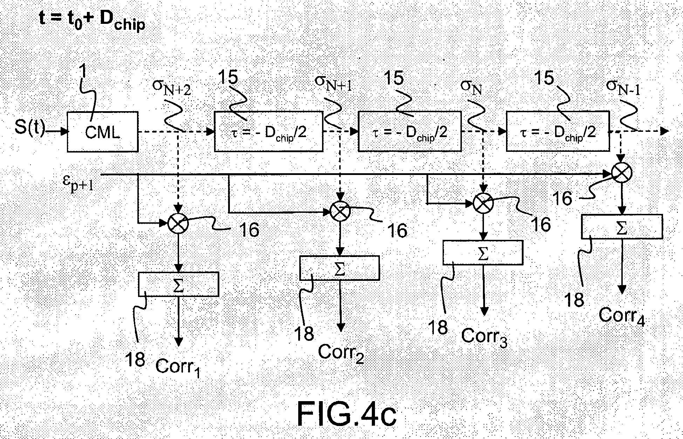

La figure 4 représente une variante de l'architecture d'un « Multicorrélateur». Cette variante consiste à permuter les rôles du codes et du signal.

Dans le dispositif présenté sur les figures 3, les calculs de corrélations sont réalisés entre des premières séquences extraites d'un signal numérique comportant un code local et une deuxième séquence résultant d'un échantillonnage à une fréquence $F_e$ d'un signal reçu, les premières séquences étant décalées temporellement l'une par rapport à l'autre pour chaque calcul de corrélation. Dans la variante présentée sur les figures 4, les calculs de corrélations sont réalisés entre une première séquence extraite d'un signal numérique comportant un code local et des deuxièmes séquences résultant d'un échantillonnage à une fréquence $F_e$ d'un signal reçu, les deuxièmes séquence étant décalées temporellement l'une par rapport à l'autre pour chaque calcul de corrélation.

Les figures 4a, 4b et 4c représentent le même dispositif de calcul de corrélation à trois instants successifs $t_0$, $t_0+D_{chip}/2$ et $t_0+D_{chip}$ correspondant à une nouvelle impulsion de l'oscillateur NCO.

Les résultats de cumuls élémentaires sont employés pour déterminer des résultats de calculs de corrélations entre une première séquence et des deuxièmes séquences, les deuxièmes séquences se déduisant l'une de l'autre par un décalage temporel de durée $D_{chip}/2$.

Le procédé comporte en outre, pour chaque deuxième séquence :

- une étape de pondération de chaque résultat de cumul élémentaire de la deuxième séquence par la valeur du chip de la première séquence au début du cumul élémentaire, pour obtenir des résultats de cumuls pondérés, et
- une étape d'accumulation des résultats de cumuls pondérés.

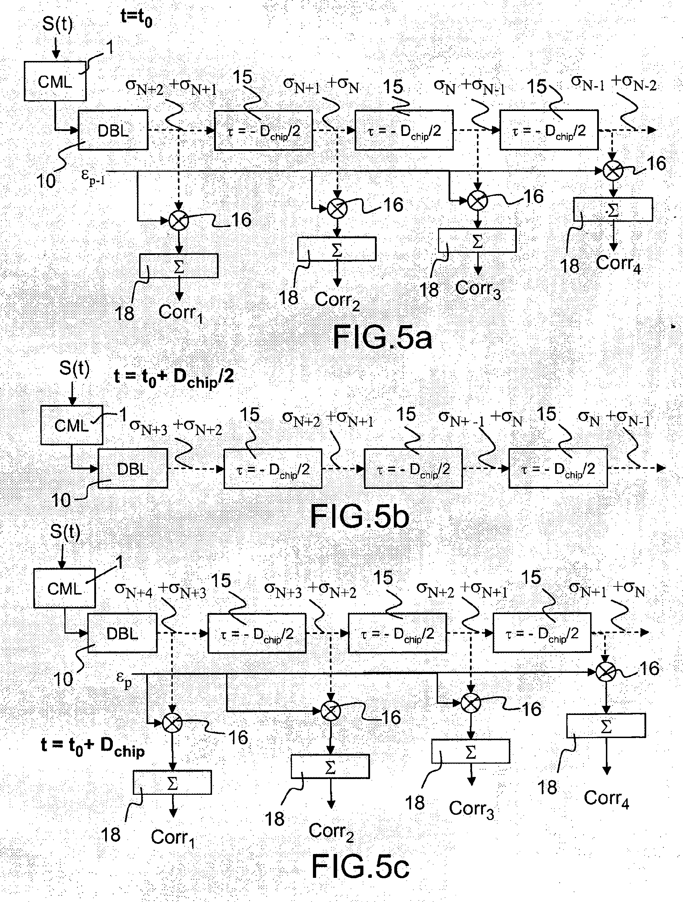

Les figures 5 représentent une deuxième variante de l'architecture d'un « Multicorrélateur» qui correspond au procédé selon l'invention. L'avantage de cette variante tient dans une réduction du nombre des opérations (sommes et produits) à effectuer pour obtenir des résultats de calculs de corrélation entre le code et le signal atteinte au moyen d'une mise en facteur réalisée par une sommation préalable de deux cumuls élémentaires.

Le principe de cette variante consiste à intercaler, entre une étape de cumul d'échantillons du signal S donnant accès aux résultats de cumuls élémentaires, et un transfert des cumuls élémentaire vers un registre à décalage, une étape de sommation de deux cumuls élémentaires consécutifs pour obtenir des résultats de double cumul élémentaire.

Cette étape de sommation est représentée sur la figure 5 par un opérateur doubleur DBL, 10 délivrant une somme de deux cumuls élémentaires consécutifs pour chaque nouvelle impulsion de l'oscillateur NCO après l'élaboration des cumuls élémentaires par le dispositif d'accumulation CML.

Dans cette variante ce sont les doubles cumuls élémentaires qui sont transférés vers le registres à décalage cadencé par les impulsions du NCO.

Les figures 5a, 5b et 5c représentent le même dispositif de calcul de corrélation à trois instants successifs $t_0$, $t_0+D_{chip}/2$ et $t_0+D_{chip}$ correspondant chacun à une nouvelle impulsion de l'oscillateur NCO.

Si à l'instant $t_0$ ; l'opérateur doubleur DBL délivre la valeur $\sigma_{N+2}+\sigma_{N+1}$, à l'instant $t_0+D_{chip}/2$, l'opérateur doubleur délivre la valeur $\sigma_{N+3}+\sigma_{N+2}$ et à l'instant $t_0+D_{chip}$, l'opérateur doubleur délivre la valeur $\sigma_{N+4}+\sigma_{N+3}$.

On constate qu'il existe un recouvrement entre les valeurs délivrées par l'opérateur doubleur, ainsi la valeur $\sigma_{N+1}$ est présente en sortie de l'opérateur doubleur aux instants $t_0$ et $t_0+D_{chip}/2$, ce qui est inutile pour le calcul des corrélations. Ceci impose qu'une impulsion sur deux, ici à l'instant $t_0+D_{chip}/2$, les valeurs présentes dans les registre 15 du registre à décalage ne sont ni pondérées par des valeurs du codes ni a fortiori accumulées dans des dispositifs accumulateurs $\Sigma$ contrairement aux deux dispositif de multicorrélateur présentés sur les figures 3 et 4.

Les opérateurs multiplicatifs et les dispositifs accumulateurs $\Sigma$ qui sont présents sur la figure 5a ne sont pas représentés sur la figure 5b, afin d'illustrer l'absence de l'étape de pondération et de sommation à instant $t_0+D_{chip}/2$. En réalité, ces dispositifs sont réellement présents mais ils ne sont pas actifs à cet instant.

Le procédé selon l'invention comporte :

- une étape de sommation de deux résultats de cumuls élémentaires consécutifs pour obtenir des résultats de double cumul élémentaire,
- une étape de pondération de chaque résultat de double cumul élémentaire de la deuxième séquence par la valeur du code de la première séquence pour obtenir des résultats de cumuls doubles pondérés, et
- une étape d'accumulation des résultats de cumuls doubles pondérés.

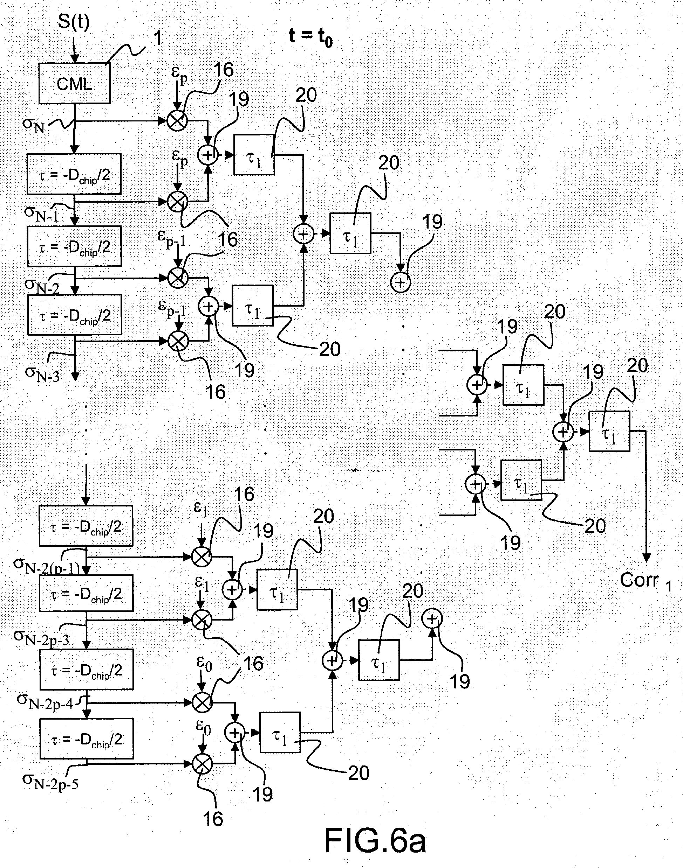

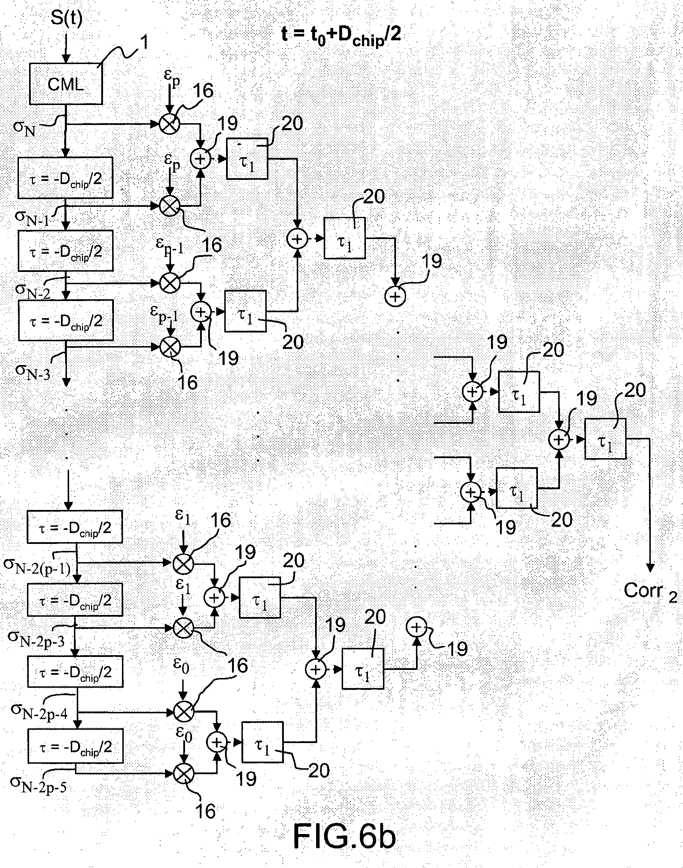

La figure 6 représente un deuxième mode de réalisation d'un dispositif selon le procédé décrit à titre d'exemple. Ce deuxième mode de réalisation concerne la mise en oeuvre d'une architecture de corrélateur connue sous les noms « filtre adapté », « Passive Matched filtering » en anglais ou sous l'acronyme PMF.

Les figures 6a, 6b représentent le même dispositif de calcul de corrélation à deux instants successifs $t_0$, $t_0+D_{chip}/2$ correspondant chacun à une nouvelle impulsion de l'oscillateur NCO.

Comme dans le dispositif décrit dans la figure 4a, un dispositif d'accumulation CML, 1 cumule des échantillons du signal S sur une durée séparant deux impulsions consécutives de l'oscillateur NCO, c'est à dire en moyenne sur la durée $D_{chip}/2$. Ces cumuls d'échantillons sont notés $\sigma_j$, où j est un indice de cumul élémentaire pouvant aller par exemple de 0 à 2.(p-1).

Les valeurs prises par les cumuls élémentaires $\sigma_j$, sont envoyées séquentiellement sur un registre à décalages comportant un nombre égal à 2.p registres qui est très supérieur au nombre de registre rencontré pour les registres à décalage des « multicorrélateurs ». Le contenu de chaque registre 15 est transmis à une première entrée d'un opérateur multiplicatif 16. Sur les figures 6, les registres du registre à décalages sont représenté verticalement.

Les opérateurs multiplicatifs comportent une deuxième entrée sur laquelle est présentée une valeur de code échantillonnée $\varepsilon_i$. Cette valeur reste constante pendant la durée des calcul de corrélation. Les opérateurs multiplicatifs sont groupés par couples, les opérateurs appartenant à un même couple reçoivent sur leur deuxième entrée une valeur $\varepsilon_i$ identique.

Ainsi à l'instant $t_0$ qui correspond à une impulsion de l'oscillateur NCO, chaque opérateur multiplicatif 16, délivre, sur une sortie, un résultat d'un produit d'un code échantillonné $\varepsilon_i$ et d'un cumul élémentaires $\sigma_j$. Ce résultat correspond à une étape de pondération de chaque cumul élémentaire $\sigma_j$ par une valeur de la séquence de code $\varepsilon_i$ pendant l'intervalle d'intégration correspondant au calcul de $\sigma_j$. Les résultats issus de deux opérateurs multiplicatifs 16, sont transférés sur une première et une deuxième entrée d'un dispositif sommateur 19 délivrant une somme des cumuls pondérés placés sur la première et la deuxième entrée.

Les résultats des sommes de cumuls pondérés sont ensuite sommées deux à deux au moyen d'une succession de dispositifs sommateurs 19, disposés en pyramide ou arbre de sommation. Quelques exemplaires de dispositif sommateurs 19, constituant une fraction de la pyramide sont représentés sur la figure 6a.

Des dispositifs de stabilisation $\tau_1$, 20, sont intercalés entre chaque dispositif sommateur 19. L'action d'un dispositif de stabilisation intercalé entre un premier et un deuxième dispositif sommateur 19 consiste à stabiliser le signal électrique en sortie du premier dispositif sommateur avant qu'il alimente une entrée du deuxième dispositif sommateur, au prix d'un retard de propagation dans la pyramide. La sortie du dispositif sommateur 19 au sommet de la pyramide constitue le résultat de la corrélation $Corr_1$.

A chaque impulsion de l'oscillateur NCO une nouvelle valeur de cumul élémentaire est transférée au registre à décalages, tous les contenus des registres 15 sont transférés au registre directement voisin, c'est à dire que le contenu d'un registre est décalé d'un registre vers le bas à chaque impulsion, et un nouveau résultat de corrélation, $Corr_2$ est disponible sur le dispositif sommateur 19 du sommet de la pyramide, après une durée de propagation physique des signaux électrique pour le parcours de la pyramide, de la gauche vers la droite.

Avantageusement, l'étape d'accumulation délivre un résultat à chaque impulsion de l'oscillateur NCO.

Ce mode de réalisation est qualifié de « passif » car, en régime permanent, il permet d'accéder à chaque impulsion de l'opérateur NCO à un nouveau résultat de calcul de corrélation. Sur une longueur d'intervalle d'intégration égale, le nombre de résultats de corrélation collectés est nettement plus élevé que celui déterminé par un dispositif « multicorrélateur ». Cet avantage permet d'éviter de recourir à une étape d'analyse par un calculateur pour définir le retard ou l'avance à assigner au code à tester.

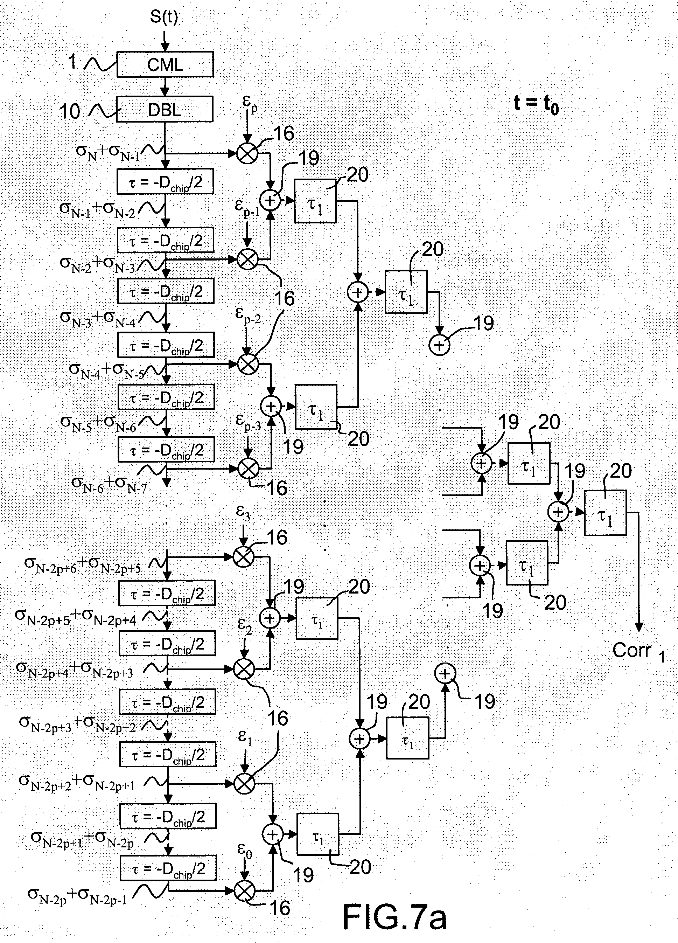

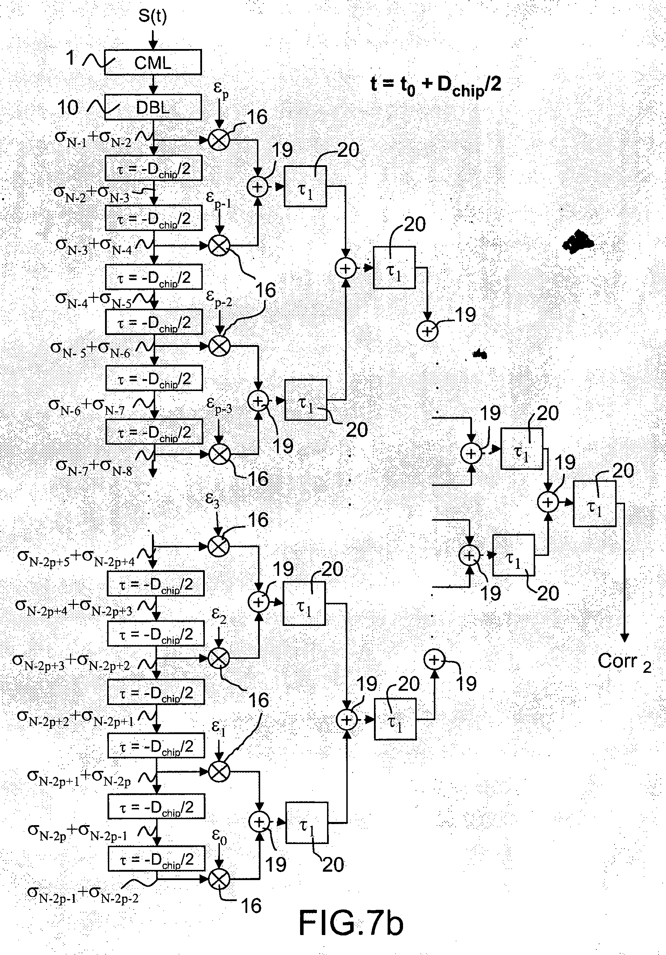

Les figures 7 représentent une variante du dispositif représenté sur les figures 6 qui correspond au procédé selon l'invention. Les figures 7a, 7b représentent le même dispositif de calcul de corrélation à deux instants successifs $t_0$, $t_0+D_{chip}/2$ correspondant chacun à une nouvelle impulsion de l'oscillateur NCO.

Un dispositif d'accumulation CML, 1 cumule des échantillons du signal S sur une durée séparant deux impulsions consécutives de l'oscillateur NCO, c'est à dire en moyenne sur la durée $D_{chip}/2$. Ces cumuls d'échantillons sont notés $\sigma_j$, où j est un indice de cumul élémentaire pouvant aller par exemple de 0 à 2.(p-1).

Le principe de cette variante consiste à intercaler, entre une étape de cumul d'échantillons du signal S donnant accès aux résultats de cumuls élémentaires, et un transfert des cumuls élémentaire vers un registre à décalage, une étape de sommation de deux cumuls élémentaires consécutifs pour obtenir des résultats de double cumul élémentaire.

Cette étape de sommation est représentée sur la figure 7 par un opérateur doubleur DBL, 10 délivrant une somme de deux cumuls élémentaires consécutifs pour chaque nouvelle impulsion de l'oscillateur NCO après l'élaboration des cumuls élémentaires par le dispositif d'accumulation CML.

Les valeurs des sommes de deux cumuls élémentaires consécutifs $\sigma_j+\sigma_{j+1}$, appelées « double cumul élémentaire », sont envoyées séquentiellement sur un registre à décalages comportant 2.p registres identique à celui représenté sur les figures 6. Le contenu d'un registre 15 sur deux est transmis à une première entrée d'un opérateur multiplicatif 16.

Les opérateurs multiplicatifs 16, comportent une deuxième entrée sur laquelle est présentée une valeur de code échantillonnée $\varepsilon_i$. Cette valeur reste constante pendant la durée des calculs de corrélation. Ainsi, à l'instant to qui correspond à une impulsion de l'oscillateur NCO, chaque opérateur multiplicatif 16, délivre, sur une sortie, un résultat d'un produit d'un code échantillonné $\varepsilon_i$ et d'un double cumul élémentaire. Ce résultat correspond à une étape de pondération de chaque double cumul élémentaire par une valeur de code $\varepsilon_i$. Les résultats issus de deux opérateurs multiplicatifs 16, sont transférés sur une première et une deuxième entrée d'un dispositif sommateur 19, délivrant la somme des cumuls doubles pondérés placés sur la première et la deuxième entrée.

Les résultats des sommes des cumuls doubles pondérés sont ensuite sommées deux à deux au moyen d'une succession de dispositifs sommateurs 19, disposés en pyramide. Quelques exemplaires de dispositif sommateurs 19, constituant une fraction de la pyramide sont représentés sur la figure 7a.

Des dispositifs de stabilisation $\tau_1$ 20, sont intercalés entre chaque dispositif sommateur 19. La sortie du dispositif sommateur 19 au sommet de la pyramide constitue le résultat de la corrélation Corr$_1$.

A chaque impulsion de l'oscillateur NCO une nouvelle valeur de double cumul élémentaire est transférée au registre à décalages, tous les contenus des registres 15 sont transférés au registre directement voisin, c'est à dire que le contenu d'un registre est décalé d'un registre vers le bas à chaque impulsion, et un nouveau résultat de corrélation : Corr$_2$ est disponible sur le dispositif sommateur 19 du sommet de la pyramide.

Avantageusement, la première séquence est un code pseudo-aléatoire de type BPSK et le signal analogique comporte une porteuse modulée par le code pseudo-aléatoire.

Avantageusement, le signal analogique comporte une modulation par une sous-porteuse.

Avantageusement, un récepteur de signal de radionavigation comporte un composant numérique de type ASIC ou FPGA mettant en oeuvre le procédé selon l'invention.

## Revendications

1.   Procédé de calcul de corrélations entre une première séquence et une deuxième séquence, ladite première séquence et ladite deuxième séquence ayant chacune une durée D$_{Code}$, la première séquence étant extraite d'un signal numérique comportant un code, ledit code comportant des divisions temporelles élémentaires, appelées chips, d'une durée D$_{chip}$, lesdits chips étant échantillonnés sur des impulsions délivrées par un oscillateur NCO à la fréquence moyenne 2/D$_{chip}$, la deuxième séquence résultant d'un échantillonnage à une fréquence Fe d'un signal analogique, la fréquence Fe étant supérieure à 2/D$_{chip}$, ledit procédé comportant une étape de cumul des échantillons de la deuxième séquence, sur des intervalles d'intégration consécutifs de durée égale en moyenne à D$_{chip}$/2, débutant à chaque impulsion de l'oscillateur NCO, pour déterminer des résultats de cumuls élémentaires, les résultats de cumuls élémentaires étant employés pour déterminer des résultats de calculs de corrélations entre une première séquence et des deuxièmes séquences, les deuxièmes séquences se déduisant l'une de l'autre par un décalage temporel de durée D$_{chip}$/2, **caractérisé en ce qu'**il comporte les étapes suivantes :

   - une étape de sommation de deux résultats de cumuls élémentaires consécutifs pour obtenir des résultats de double cumul élémentaire ;
   - une étape de pondération de chaque résultat de double cumul élémentaire de la deuxième séquence par la valeur du code de la première séquence pour obtenir des résultats de cumuls doubles pondérés ;
   - une étape d'accumulation des résultats de cumuls doubles pondérés.

2.   Procédé de calcul de corrélations selon la revendication 1, mis en oeuvre par un dispositif de type multicorrélateur, **caractérisé en ce que** l'étape d'accumulation délivre au moins un résultat après p impulsions successives de l'oscillateur NCO, où p est égal à la partie entière de D$_{Code}$/D$_{chip}$.

3.   Procédé de calcul de corrélations selon la revendication 1, mis en oeuvre par un dispositif de type filtre adapté, **caractérisé en ce que** l'étape d'accumulation délivre un résultat à chaque impulsion de l'oscillateur NCO.

4.   Procédé de calcul de corrélations selon l'une des revendications 1 à 3, **caractérisé en ce que** la première séquence est un code pseudo-aléatoire, le signal analogique comporte une porteuse modulée par le code pseudo-aléatoire et **en ce que** la modulation est de type BPSK.

5.   Procédé de calcul de corrélations selon l'une des revendications 1 à 4, **caractérisé en ce que** le signal analogique comporte une modulation par une sous-porteuse.

6.   Récepteur d'un signal de radionavigation, **caractérisé en ce qu'**il comprend un composant numérique de type ASIC ou FPGA mettant en oeuvre le procédé selon l'une des revendications 1 à 5.

**Patentansprüche**

1. Verfahren zum Berechnen von Korrelationen zwischen einer ersten Sequenz und einer zweiten Sequenz, wobei die erste Sequenz und die zweite Sequenz jeweils eine Dauer $D_{Code}$ haben, wobei die erste Sequenz von einem Digitalsignal extrahiert ist, das einen Code umfasst, wobei der Code elementare Zeiteinteilungen, Chips genannt, mit einer Dauer $D_{chip}$ umfasst, wobei die Chips an Impulsen abgetastet werden, die von einem NCO-Oszillator mit der Mittelfrequenz $2/D_{chip}$ geliefert werden, wobei die zweite Sequenz von einer Abtastung eines Analogsignals mit einer Frequenz Fe resultiert, wobei die Frequenz größer als $2/D_{chip}$ ist, wobei das Verfahren einen Schritt des Summierens von Samples der zweiten Sequenz auf konsekutiven Integrationsintervallen einer Dauer beinhaltet, die im Mittel gleich $D_{chip}/2$ ist, beginnend bei jedem Impuls des NCO-Oszillators, um Ergebnisse von Elementarsummen zu ermitteln, wobei die Ergebnisse von Elementarsummen zum Ermitteln von Ergebnissen von Berechnungen von Korrelationen zwischen einer ersten Sequenz und zweiten Sequenzen benutzt werden, wobei die zweiten Sequenzen voneinander um eine Zeitverschiebung der Dauer $D_{chip}/2$ abgeleitet werden, **dadurch gekennzeichnet, dass** es die folgenden Schritte beinhaltet:

   einen Schritt des Addierens von zwei Ergebnissen von konsekutiven Elementarsummen, um doppelte Elementarsummenergebnisse zu erhalten;
   einen Schritt des Gewichtens jedes doppelten Elementarsummenergebnisses der zweiten Sequenz durch den Wert des Codes der ersten Sequenz, um doppelte gewichtete Summenergebnisse zu erhalten;
   einen Schritt des Akkumulierens von doppelt gewichteten Summenergebnissen.

2. Verfahren zum Berechnen von Korrelationen nach Anspruch 1, implementiert mit einer Vorrichtung des Multikorrelatortyps, **dadurch gekennzeichnet, dass** der Akkumulationsschritt wenigstens ein Ergebnis nach p aufeinander folgenden Impulsen des NCO-Oszillators liefert, wobei p gleich dem ganzzahligen Teil von $D_{Code}/D_{chip}$ ist.

3. Verfahren zum Berechnen von Korrelationen nach Anspruch 1, implementiert mit einem Gerät des Matched-Filter-Typs, **dadurch gekennzeichnet, dass** der Akkumulationsschritt ein Ergebnis auf jedem Impuls des NCO-Oszillators liefert.

4. Verfahren zum Berechnen von Korrelationen gemäß einem der Ansprüche 1 bis 3, **dadurch gekennzeichnet, dass** die erste Sequenz ein pseudozufälliger Code ist, das Analogsignal einen durch den pseudozufälligen Code modulierten Träger umfasst, und dadurch, dass die Modulation vom BPSK-Typ ist.

5. Verfahren zum Berechnen von Korrelationen nach einem der Ansprüche 1 bis 4, **dadurch gekennzeichnet, dass** das Analogsignal eine Modulation durch einen Subträger umfasst.

6. Funknavigationssignalempfänger, **dadurch gekennzeichnet, dass** er eine digitale Komponente des ASIC- oder FPGA-Typs umfasst, der das Verfahren nach einem der Ansprüche 1 bis 5 ausführt.

**Claims**

1. A method for calculating correlations between a first sequence and a second sequence, said first sequence and said second sequence each having a duration $D_{Code}$, the first sequence being extracted from a digital signal comprising a code, said code comprising elementary time divisions, referred to as chips, of duration $D_{chip}$, said chips being sampled on pulses delivered by an NCO oscillator at the mean frequency $2/D_{chip}$, the second sequence resulting from the sampling of an analogue signal at a frequency Fe, with said frequency being greater than $2/D_{chip}$, said method comprising a step of totalling samples of the second sequence, on consecutive integration intervals of a duration that is on average equal to $D_{chip}/2$, starting at each pulse of the NCO oscillator, so as to determine results of elementary cumulations, with the results of elementary cumulations being used to determine results of calculations of correlations between a first sequence and second sequences, with the second sequences being deduced from each other by a time shift of duration $D_{chip}/2$, **characterised in that** it comprises the following steps:

   a step of summing up the two results of consecutive elementary totals so as to obtain double elementary total results;

a step of weighting each double elementary total result of the second sequence by the value of the code of the first sequence so as to obtain double weighted total results;

a step of accumulating double weighted totals results.

2. The method for calculating correlations according to claim 1, implemented by a device of the multi-correlator type, **characterised in that** said accumulation step delivers at least one result after p successive pulses of the NCO oscillator, where p is equal to the integer part of $D_{Code}/D_{chip}$.

3. The method for calculating correlations according to claim 1, implemented by a device of the matched filter type, **characterised in that** said accumulation step delivers a result on each pulse of the NCO oscillator.

4. The method for calculating correlations according to any one of claims 1 to 3, **characterised in that** said first sequence is a pseudo-random code, the analogue signal comprises a carrier modulated by the pseudo-random code, and **in that** the modulation is of the BPSK type.

5. The method for calculating correlations according to any one of claims 1 to 4, **characterised in that** said analogue signal comprises a modulation by a sub-carrier.

6. A radio navigation signal receiver, **characterised in that** it comprises a digital component of the ASIC or FPGA type implementing the method according to any one of claims 1 to 5.

FIG.1

FIG.2

FIG.3a

FIG.3b

$$t = t_0 + D_{chip}$$

FIG.3c

FIG.4a

FIG.4b

**FIG.4c**

FIG.5a

FIG.5b

FIG.5c

FIG.6a

FIG.6b

FIG.7a

FIG.7b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0065751 A